# EUROPEAN PATENT SPECIFICATION

(11) **EP 1 962 456 B1**
(45) Date of publication and mention of the grant of the patent: **19.08.2009**
(21) Application number: 07003606.6
(22) Date of filing: 21.02.2007
(51) Int. Cl.: H04L 12/56, H04L 29/06, H04W 72/12

(54) **Transceiver apparatus for cooperative wireless network**
Sende/Empfangsgerät für kooperative drahtlose Netzwerke
Appareil d'émission-réception pour réseau sans fil coopératif

(43) Date of publication of application: 27.08.2008
(73) Proprietor: NTT DoCoMo Inc., Chiyoda-ku Tokyo 100-6150 (JP)
(72) Inventor: Valentin, Stefan, 33102 Paderborn (DE); Karl, Holger, 33100 Paderborn (DE); Aad, Imad, 80689 München (DE)
(74) Representative: Zinkler, Franz

(56) References cited:
- US-A1- 2005 169 174
- US-A1- 2006 239 222
- JARDINE A J ET AL: "Dual antenna cooperative diversity techniques" IEE PROCEEDINGS : COMMUNICATIONS, INSTITUTION OF ELECTRICAL ENGINEERS, GB, vol. 153, no. 4, 3 August 2006 (2006-08-03), pages 556-564, XP006026757 ISSN: 1350-2425
- LANEMAN J M ET AL: "Distributed Space-Time Coded Protocols for Exploiting Cooperative Diversity in Wireless Networks" IEEE TRANSACTIONS ON INFORMATION THEORY, IEEE SERVICE CENTER, PISCATAWAY, NJ, US, vol. 49, no. 10, October 2003 (2003-10), pages 2415-2425, XP002986112 ISSN: 0018-9448

## Description

The present invention is in the field of wireless peer-to-peer, ad hoc, multi-hop networks, and radio access networks, as e.g. cellular networks, where mobile stations help another transmitting data frames, and particularly relates to cooperative coding techniques.

Ad hoc and multi-hop networks gain more and more significance in nowadays radio access networks. Especially with respect to future wireless networks these technologies will play an important role, since they allow the circumvention of a fixed infrastructure, which is one of the main cost contributors in nowadays networks. Moreover, multimedia services gain more and more popularity and also generate a growing revenue for operators of mobile networks.

Transmitting video or voice media streams at given time and quality constraints, i.e. fulfilling quality of service (QOS = Quality of Service) requirements, is still an issue in wireless communications and will probably put further challenges on future mobile communications, because of its growing data rates. Especially in mobile scenarios with high data rates, for example in cellular, meshed or wireless metropolitan area networks (WMAN = Wireless Metropolitan Area Network), the time variance of the wireless channel introduces transmission errors, which are also known as slow and fast fading of the mobile radio channel. If these errors cannot be corrected at the receiver, they may lead to unacceptable deteriorations of received media streams.

In wireless multi-path propagation environments mobility leads to variations of the channel states over time. This effect is also called time selective fading, i.e. slow and fast fading, and results in a probabilistically varying maximum bit rate supported per channel. This maximum bit rate is called the Shannon capacity of the channel, or briefly the channel capacity, cf. T. M. Cover and J. A. Thomas, Elements of Information Theory , Wiley series in telecommunications. John Wiley & Sons, Inc., 1991. Although time variant, the channel capacity can be assumed to remain constant over the so-called coherence period.

The resulting discrete time intervals are called fading blocks. In mobile communication scenarios fading is the typical error event. If the instantaneous channel capacity, which varies due to fading, is lower than the actual transmission rate a transmission error occurs. These errors do not affect all parts of the transmitted media information equally since media streaming data consists of parts of different importance. The importance of a media part reflects its impact on the quality of the media stream and is determined during the source encoding process. Errors in parts of higher importance typically lead to a larger decrease of the user perceived quality than errors in other parts of the stream, cf. P. Noll, "Digital audio coding for visual communications," in Proc. of the IEEE , June 1995, vol. 83, pp. 925-943, and Chen Nee Chuah and R. H. Katz, "Characterizing packet audio streams from Internet multimedia applications," in Proc. of IEEE International Conference on Communications (ICC), 2002, vol. 2, pp. 1199-1203. Examples for such important parts are I-frames in MPEG-4 (MPEG-4 = Moving Pictures Expert Group Layer 4) coded video streams or the Most Significant Bit (MSB = Most Significant Bit) of a voice sample in Constant Bit Rate (CBR = Constant Bit Rate) coded voice streams.

In digital communication systems errors are handled by error control functions. One method used in most wireless systems is Forward Error Correction (FEC = Forward Error Correction) coding. At the transmitter the FEC coder adds redundancy to the source coded data, which provides error correction at the receiver. The proportion of data in a coded bit stream is given by a code rate R = k/n with a number of input data bits k and output bits n at the encoder. FEC coding linearly decreases the error probability. For a given FEC scheme this so-called coding gain increases with smaller R, compare J. G. Proakis, Digital Communications , McGrawHill, 4 edition, 2000, i.e. the gain increases with the redundancy per bit.

A further approach to decrease error probability is diversity. Diversity works by transmitting redundancy for one traffic stream over several diversity branches. Diversity branches are independently fading parts of the channel in time or frequency or independent spatial propagation paths. For example, two independent fading blocks can be seen as two diversity branches in time. With a channel allocation scheme exploiting diversity, the error probability decreases exponentially with the number of used diversity branches. This decrease of error probability is called diversity gain.

A wireless media stream transmitter may provide error control coding, i.e. it may allocate redundancy to the source encoded bit stream to provide coding gain, and it may allocate channel resources to provide diversity gain. Although transmitters in digital mobile communications may utilize the abovementioned functions, errors still occur if the channel state degrades and the offered redundancy and diversity are not sufficient to correctly decode the bit stream at the receiver. This is especially an issue in radio access networks taking advantage of ad hoc or multi-hop connections, as multiple network nodes can be mobile, and thus, the mobile radio channel is influenced by at least two mobile nodes.

In M. Janani, A. Hedayat, T. E. Hunter, and A. Nosratinia, "Coded cooperation in wireless communications: space-time transmission and iterative decoding," IEEE Transactions on Signal Processing , vol. 52, no. 2, pp. 362-371, Feb. 2004, cooperation methods are proposed that allocate different redundancies to a node's own transmission and one from it's partner. However, these methods do not include multimedia traffic and the corresponding packet priorities, and are therefore sub-optimal with respect to multimedia transmission.

Prior art methods further have a problem that collaborating nodes allocate resources to their partners in order to operate, however, system performance does not gain from a cooperation with respect to all packets, if, for example, higher priority packets are equally treated as lower priority packets.

In X. Xu, Y. Wang, and E. Erkip, "Layered cooperation for wireless multimedia communications," in Proc. of Picture Coding Symposium , Dec. 2004, a layered cooperation method is proposed for multimedia communications, where each station allocates predefined cooperation levels for different own and partner flows of different priorities. However, this method performs static, per flow allocation, and is therefore not capable of adapting to the varying importance of data in multimedia streams.

Document D1 (Jardine A.J. et al. :"Dual Antenna cooperative diversity techniques") discloses the application of two spatial transmission techniques which can be used in a cooperative diversity wireless network, where each mobile terminal has two antenna elements. The effect of cooperative diversity upon the capacity of a link is included for single antenna cooperative diversity concepts. This concept serves as a base line model for comparison with dual antenna methods. The authors introduce two techniques which can be used for corporative diversity where mobile terminals are each equipped with two antenna elements. Using the same matrix as in the single antenna case, a comparison is made between the results from simulations of each technique. It is shown that dual antenna elements offer considerable advantage over the single antenna concepts, and that two antenna element space time transmit diversity based cooperative diversity is preferable at low SNRs.

US 2005/0169174 A1 discloses a method and a system for streaming media data. Media data comprising a plurality of data packets is accessed, together with information that quantifies a characteristic of each data packet in a plurality of data packets. Said information is used to determine an order for sending the data packets over a network.

US 2006/0239222 A1 discloses a method of providing cooperative diversity in a multiple-input multiple-output (MIMO) wireless network including a source station, a relay station and a destination station each for transmitting a plurality of streams through multiple antennas. The method comprises the steps of decoding by a relay station, a plurality of streams received from the source station, checking for errors in the individual decoded streams, and transmitting error detection information to the source station and thereafter relaying streams having no errors to the destination and retransmitting by a source station, streams corresponding to streams which were previously found to include errors to the destination station based on the error detection information.

Laneman J.M. et al., "Distributed Space-Time Coded Protocols for Exploiting Cooperative Diversity in Wireless Networks " develop and analyze space-time coded cooperative diversity protocols for combating multipath fading across multiple protocol layers in a wireless network. The protocols exploit spatial diversity available among a collection of distributed terminals that relay messages for one another in such a manner that the destination terminal can average the fading, even though it is unknown a priori which terminals will be involved. In particular, a source initiates transmission to its destination, and many relays portentially receive the transmission. Those terminals that can fully decode the transmission utilize a space-time code to cooperatively relay to the destination. The authors demonstrate that these protocols achieve full spatial diversity in the number of cooperating terminals, not just the number of decoding relays, and can be used effectively for higher spectral efficiencies than repetition-based schemes. The authors discuss issues related to the space-time code design for these protocols, emphasizing codes that readily allow for appealing distributed versions.

It is the objective of the present invention to provide an improved cooperation method for wireless network nodes, which provides enhanced performance for multimedia data streams.

The objective is achieved by a transceiver apparatus according to claim 1 and a method for transceiving according to claim 15.

The objective is achieved by a transceiver apparatus comprising a receiver module for receiving a second data packet from a remote transceiver during a first frame. The transceiver apparatus further comprises a prioritization module for comparing a priority of a first data packet to be transmitted by the transceiver apparatus and a priority of the second data packet, and for determining the data content of a second frame based on a priority comparison result, such that higher priority information is preferred over lower priority information and wherein at least a part of the data content is based on the second data packet. The transceiver apparatus further comprises a transmitter module for transmitting the data content during the second frame.

The present invention is based on the finding that an enhanced performance of multimedia streaming services can be achieved by allocating cooperation shares between collaborating nodes, based on a relative "importance" of the packets to be transmitted at each node. This typically applies to multimedia systems where different packets have different priorities, as in one embodiment for I-, P-, and B-video frames, to make cooperation and its allocation level more reliable. Embodiments of the present invention therefore provide a high quality wireless communication in wireless access networks.

Embodiments of the present invention therefore adapt the cooperation level, i.e. diversity and redundancy provision, to a relative importance between packets from an own network source and a partner network source. A network node that is willing to cooperate, therefore, first checks if it overheard the partner's transmissions correctly, and then it compares the priority of the partner's data packet to the priority of its own data packet, which is scheduled for transmission. It can then adapt the amount of redundancy for both packets to the relative priority between the two packets. Consequently, embodiments of the present invention, allocate more cooperation to more important packets, making multimedia transmissions more reliable and of higher quality.

Embodiments of the present invention combine cooperative coding and traffic-awareness in multi-user environments. Based on the knowledge of traffic characteristics, i.e. of data priority, embodiments decrease the probability that transmission errors degrade the quality of the transmitted media streams.

During a transmission the importance of a data packet of a media stream can be determined by the packet classification. This enables the transmission system, or the cooperating network node, to prioritize more important parts of the stream.

Preferred embodiments of the present invention will be detailed in the following with the help of the accompanying figures, in which:
Fig. 1 shows an embodiment of a transceiver apparatus;
Fig. 2 shows an embodiment of an encoding and decoding function;
Fig. 3 illustrates an embodiment where four diversity branches are utilized;
Fig. 4 shows a flow chart of an embodiment of a transceiver apparatus;
Fig. 5 shows an embodiment of four diversity branches which are asymmetrically utilized;
Fig. 6 shows another embodiment where four diversity branches are asymmetrically utilized;
Fig. 7 shows simulation results in terms of MOS-levels for different cooperative coding approaches and an embodiment;
Fig. 8 shows simulation results in terms the MIV-levels for different cooperative coding approaches and an embodiment;
Fig. 9 shows simulation results in terms of a packet loss rated for different cooperative coding approaches and an embodiment; and
Fig. 10 shows simulation results in terms of PSNR for different cooperative coding approaches and an embodiment for a transmission of a video stream.

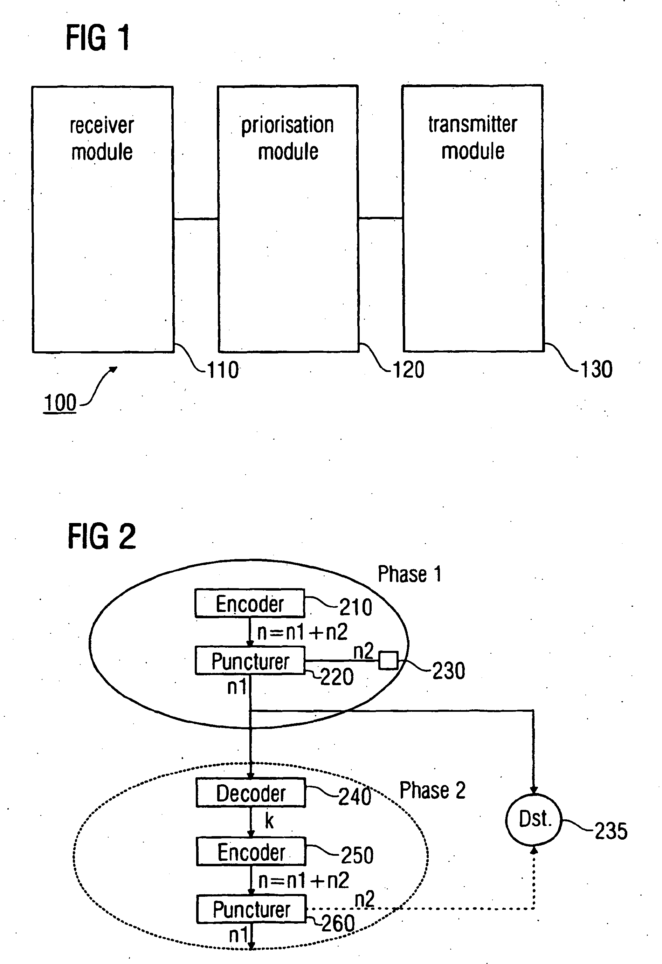

Fig. 1 depicts a transceiver apparatus 100. The transceiver apparatus comprises a receiver module 110 for receiving a second data packet from a remote transceiver during a first frame. The transceiver apparatus 100 further comprises a prioritization module 120 for comparing a priority of a first data packet to be transmitted by the transceiver apparatus 100 and a priority of the second data packet and for determining a data content of a second frame based on a priority comparison result, such that higher priority information is preferred over lower priority information and wherein at least a part of the data content is based on the second data packet. The transceiver apparatus 100 further comprises a transmitter module 130 for transmitting the data content during the second frame.

In one embodiment of the present invention, the prioritization 120 is adapted for basing the data content only on the second data packet, if the priority of the second data packet is higher than the priority of the first data packet. In another embodiment, the prioritization module 120 is adapted for transcoding the second data packet and for adapting the transcoding to a number of bits based on the priority of the second data packet. Moreover, in one embodiment the prioritization module 120 can be adapted for determining a first number of bits of the data content to be based on the first data packet and a second number of bits of the data content to be based on the second data packet, the first number and the second number being based on the priorities of the first and second data packets.

Embodiments of the inventive prioritization module 120 can be adapted for including a first number of redundancy bits and a second number of redundancy bits into the data content. The transmitter module 130 can be adapted for transmitting the first data packet before the data content in one embodiment of the present invention. In contention based systems, for example in 802.11 systems, each transmission may be divided into two phases, the transmitter module 130 can then be adapted to first transmit the own or first data packet before transmitting redundancy for the first and second data packets in a second phase. In another embodiment, the transmission of the first data packet of a user can happen during the first frame, while simultaneously in the second frame redundancy information for the first data packet and a data packet of a different user, which was received earlier, is transmitted, as it is possible for example in a CDMA (CDMA = Code Division Multiple Access) system, when utilizing multiple channelization codes for simultaneous transmissions.

In yet another embodiment the receiver module 110 can be adapted for receiving a second acknowledgement packet associated with the second data packet, and the transceiver apparatus 100 only cooperates with the remote transceiver if the acknowledgement packet is not received. I.e. in this embodiment the inventive transceiver apparatus 100 cooperates or helps the remote transceiver only if the second data packet was not acknowledged by an intended destination.

In another embodiment the receiver module 110 is adapted for performing a CRC (CRC= Cyclic Redundancy Check) on the second data packet to determine if it was received successfully or correctly.

The receiver module 110 can be adapted for receiving data packets according to the 802.11 specifications and the transmitter module 130 can also be adapted for transmitting data packets according to the 802.11 specifications. In other embodiments of the present invention, the receiver module 110 can be adapted for receiving data packets according to a TDMA (TDMA = Time Division Multiple Access) or CDMA system. Correspondingly, the transmitter module 130 can be adapted for transmitting data packets according to a TDMA or CDMA system.

In another embodiment, the first or second data packet comprise video data, for example in terms of MPEG-4 data packets, thus I,-P- and/or B-frames of MPEG-encoded video data. The first or second data packet may also comprise voice data.

Embodiments of the present invention deploy a traffic-aware asymmetric co-operative diversity (TACD = Traffic-aware Cooperative Diversity) for media streaming and decrease the error probability for e.g. the important parts of media streaming data.

Embodiments combine the approaches of user cooperative diversity and traffic-awareness. While traffic-awareness enables the consideration of traffic parameters during the transmission, with cooperation diversity, users mutually provide spatial diversity by transmitting cooperatively. Embodiments allocate the cooperative diversity to important parts of the media stream. This prioritization increases the overall quality of the transmitted and decoded media stream without retransmitting its erroneous parts.

User cooperation allows users to share their resources during transmission of their independent data streams. If the shared resources fade independently, this provides additional diversity branches per user and hence, a diversity gain. Embodiments are based on coded cooperation, compare T. E. Hunter and A. Nosratinia, "Cooperation diversity through coding," in Proc. of IEEE International Symposium on Information Theory (ISIT), July 2002, p. 220, which utilizes a user diversity scheme for wireless networks. Coded cooperation follows the approach of space-time diversity cooperation, where users share their antennae in several time frames during the transmission to provide diversity branches in time and space. In contrast to earlier user cooperation schemes, as for example described in A. Sendonaris, E. Erkip, and B. Aazhang, "Increasing uplink capacity via user cooperation diversity," in Proc. of IEEE International Symposium on Information Theory (ISIT), Aug. 1998, p. 156, and in J. N. Laneman, G. W. Wornell, and D. N. C. Tse, "An efficient protocol for realizing cooperative diversity in wireless networks," in Proc. of IEEE International Symposium on Information Theory (ISIT), June 2001, p. 294, coded cooperation integrates space-time diversity only by distributed FEC coding.

Considering two core operating users transmitting to a single destination, both users divide the transmission of a single data packet in, for example, two phases. During the first phase, they transmit their own data packets. During a second phase they transmit redundancy for the data packet transmitted by themselves or another user in the first phase, if same was not received correctly. Whether the data packet was received correctly or not during the first phase can for example be determined by overhearing an acknowledgement packet, which is however not the subject of the present application and well-known from prior art. Assuming that any prior art concept is established, Fig. 2 illustrates an embodiment of preparing the data content of the second phase for a transmission frame. With respect to the time sequence of the first and the second phase, it should be noted that the two first phases of two users can be simultaneous, as for example in a CDMA or OFDMA (OFDMA = Orthogonal Frequency Division Multiple Access) system. In general, each user utilizes two transmission phases, for example in a contention based system as in 802.11, the two first phases of two users are not simultaneously carried out.

As illustrated in Fig. 2 each user prepares a transmission by encoding a data packet being comprised of k bits in an encoder block 210. The result is an encoded data packet, which is comprised of n=n1+n2 data bits. The encoded data packet is then provided to a puncturer 220, which eliminates n2 bits from the encoded data packet. The encoder 210 performs by FEC coding an overall coding rate R=k/n with r<1. From the encoded data packet or data block, n2 bits are removed by the puncturer 220, according to a defined phase length and stored at the user, in a stored data packet 230. This leaves the data packet of size n1<n bits, which consists of the k data bits and redundancy. Accordingly, this can be expressed as a coding rate, i.e. R1=k/n1 with R<r1<1.

As illustrated in Fig. 2, during the first phase "Phase 1" each user transmits its own n1 bits. Due to the broadcast character of the wireless medium, each user transmits its n1 bits via an uplink channel to a destination 235, as well as via inter-user channels to cooperating partners. From the bits received during the first phase "Phase 1" each user decodes k data bits of the partners, which is carried out by the decoder 240 during the second phase "Phase 2". Furthermore, it is assumed, that a cooperative partner determines, that the transmission of a partner during the first phase "Phase 1" was not successful, for example by determining whether an acknowledgement packet was transmitted by the destination 235 or not, respectively if a negative acknowledgement packet was transmitted. Furthermore, a user verifies whether he received a data packet from a potential partner correctly, which can e.g. be carried out by a CRC check. If the decoded data is correct the user cooperates by restoring the n2 removed bits of the partner.

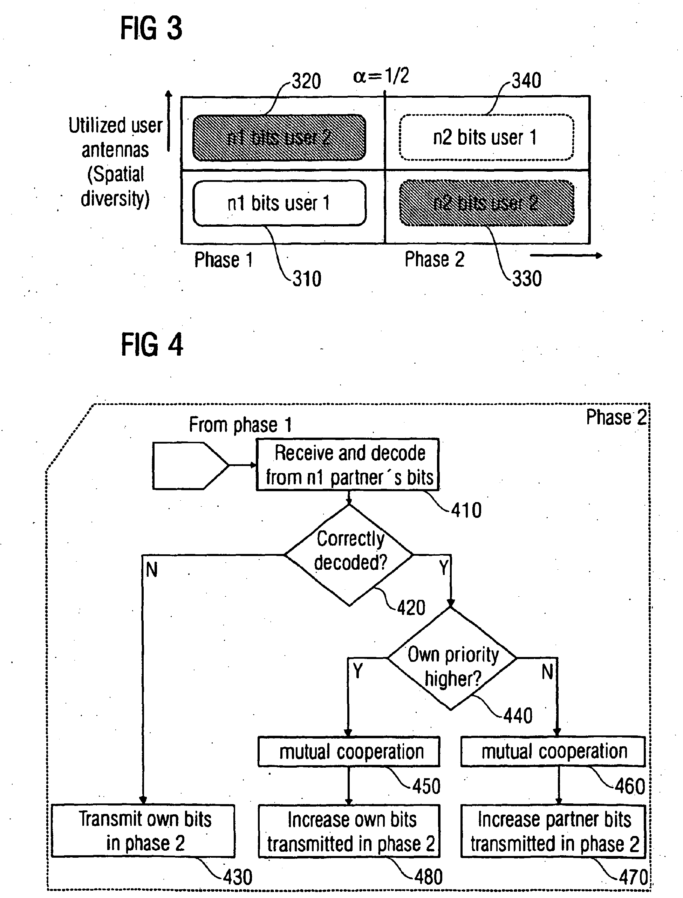

As shown in Fig. 2, the cooperation is carried out by re-encoding 250 and puncturing 260 the partner's data. Finally, the n2 restored partner bits are transmitted in the second phase "Phase 2" to the destination 235, which provides diversity for the partner at the destination 235. Spatial diversity results from using the partner's antennae and temporal diversity can be provided if both phases are independent fading blocks, i.e. the separation of the phases in time exceeds the coherence time of the mobile radio channel. In that case, four diversity branches can result. Fig. 3 shows an embodiment of four diversity branches, which are provided if both users fully cooperate. In Fig. 3, transmissions of user 1 are indicated at the bottom and transmissions of user 2 are indicated at the top. Fig. 3 shows time on the abscissa and the utilized user antennae on the ordinate, the so-called spatial diversity. During the first phase user 1 transmits n1 bits, which is indicated by the block 310, respectively user 2 transmits n1 bits during the first phase, which is indicated by block 320. Assuming that both users received each other's transmissions or data packets from the first phase, they can fully cooperate during the second phase. During the second phase, user 1 transmits n2 bits of user 2, respectively user 2 transmits n2 bits for user 1 as indicated by the blocks 330 and 340 in Fig. 3.

However, full cooperation is not always possible. Due to transmission errors on the inter-user channel during the first phase, one or both users may not be able to decode the partner's data. In these cases, either one or both users transmit its/their own n2 bits, which were removed and stored before in the first phase. Although this may not provide spatial diversity, it may provide temporal diversity for each user.

Coded cooperation enables to control the level of cooperation by addressing the amount of bits transmitted in the first phase. This cooperation level of coded cooperation is defined by the term n1/n, compare T.E. Hunter, S.Sanayei, and A. Nosratinia, "Outage analysis of coded cooperation" IEEE Transactions on Information Theory, vol. 52, no. 2, pp. 375-391. If both users transmit at constant rate, the duration of the two phases can also be defined. For example, with α = 1/2, both phases are of equal duration, as indicated in Fig. 3.

A tutorial on diversity schemes for Space Time User Cooporation is provided in A. Nosratinia, T.E: Hunter, and A. Hedayat, "Cooperative communication in wireless networks," IEEE Communications Magazine, vol. 42, no. 10, pp. 74-80, Oct. 2004. Detailed analysis of the common approaches are presented in T.E. Hunter, S.Sanayei, and A. Nosratinia, "Outage analysis of coded cooperation" IEEE Transactions on Information Theory, vol. 52, no. 2, pp. 375-391, A. Sendonaris, E. Erkip, and B. Aazhand, "User cooperation diversity. Part 1. System description," IEEE Transactions on Communications, vol. 51, no. 11, pp. 1927-1938, Nov. 2003; A. Sendonaris, E. Erkip, and B. Aazhand, "User cooperation diversity. Part II. Implementation aspects and performance analysis," IEEE Transactions on Communications, vol. 51, no. 11, pp. 1939-1948, Nov. 2003; and J. N. Laneman, G. W. Wornell, and D. N. C. Tse, "Cooperative diversity in wireless networks: Efficient protocols and outage behavior," IEEE Transactions on Information Theory, vol. 50, no 12, pp. 3062-3080, Dec. 2004.

Before parts of the media stream can be prioritized by allocating more resources in terms of redundancy and diversity, the accurate classification of these parts is required. With media streams, the method for classification depends on the type of the source, for example, a specific type of voice or video, and the parameters, for example, a given resolution or data rate, and a method for coding and decoding the source information, i.e. a codec. The result of the encoding process is a CBR or variable bit rate (VBR = variable bit rate) traffic stream consisting of a packet, which can be analyzed by a packet classifier. The variety of source traffic and codecs has led to a number of approaches for packet classification. Several classifiers interact with the encoders or extract encoding parameters from its output.

These approaches exploit that most encoders already classify parts of the media stream. For example, an MPEG-4 stream consists of I-, P-, and B-frames with the most important I-frames and the least important B-frames. Hence, packet classification means basically extracting the class of media frame from the packets or from passed encoder parameters. Some approaches for voice and video streams are given in J. C. De Martin, "Source-driven packet marking for speech transmission over differentiated services networks," in Proc. of the IEEE International Conference on Audio, Speech and Signal Processing, Mar. 2001, pp. 753-756; D. Quaglia and J. C. De Martin, "Adaptive packet classification for constant perceptual quality of service delivery of video streams over time-varying networks," in proc. of 2003 International Conference on Multimedia and Expo (ICME), July 2003, vol. 3, pp. 369-72; and F. Zhai, C. E. .Luna, Y. Eisenberg, T. N. Pappas, R. Berry and A. K. Katsaggelos, "Joint service coding and packet classification for real-time video transmission over differentiated services networks," IEEE Transactions on Multimedia, vol. 7, no. 4, pp. 716-726, Aug. 2005.

Classification methods that are not based on encoder interaction or parameter extraction have to analyze the payload of the packets or are based on different information, for example, on the actual packet delay, cf. J. Shin, J.W. Kim, and C. -C. J. Kuo, "Quality-of-service mapping mechanism for packet video in differentiated services network," IEEE Transactions on Multimedia, vol. 3, no. 2, pp. 219-231, June 2001. Due the more general approach, these schemes enable classification even with non-classifying codecs or if the media frame class cannot be extracted. However, this leads to problems, such as choosing the appropriate classification metrics and analyzing the media stream within strict timing constraints. Approaches for voice streaming, where non-classifying CBR codecs are typical, can, for example, be found in D. Petr, J. DaSilva, and V. Frost, "Priority discarding of speech in integrated packet networks," IEEE Journal on Selected Areas in Communications, vol. 7, no. 5, pp. 644-656, 1989; M Petracca, A Servetti, and J. C. De Martin, "Voice transmission over 802.11 wireless networks using analysis-by-synthesis packet classification," in proc. of First International Symposium on Control, Communications and Signal processing, Mar. 2004, pp. 587-590; and H. Sanneck, W. Mohr, L. Le, C. Hoene, and A. Wolisz, "Quality of service support for voice over IP over wireless," in Wireless IP and Building the Mobile Internet, S. Dixit and R. Prasad, Eds., Universal personal communications, chapter 10, Artech House, Dec. 2002.

As described above, with coded cooperation, each packet is separated into two phases. This enables to allocate FEC redundancy separately per phase. With packet classification, this allocation can prioritize more important packets, according to embodiments of the present invention.

In X. Hu, Y Wang, and E. Erkip, "Layered cooperation for wireless multimedia communications," in Proc. of Picture Coding Symposium, Dec. 2004 and X. Xu, D. Gunduz, Erkip and Y. Wang, "Layered cooperative source and channel coding," in Proc. of IEEE Conference on Communications, May 2005, vol. 2, pp. 1200-1204 layered cooperation as a traffic-aware mode of cooperative coding schemes is suggested. With layered cooperation the transmitter jointly allocates redundancy among source, channel and cooperative coding. Layered cooperation allocates the redundancy per phase individually to each of two considered traffic classes. For example, more redundancy is allocated to important packets to increase the encoding gain. In contrast to an embodiment of the present invention, in which the redundancy allocation is integrated in the user cooperating scheme, the layered cooperation approach performs redundancy allocation on top of cooperation. Layered cooperation allocates redundancy among the two cooperative phases prior to the transmission and symmetrical among the users. This allocation is independent of user cooperation since prior to the transmission it is not known whether cooperation can be performed or not. For example, if a user does not correctly receive the bits of a partner, he cannot cooperate and no cooperative diversity is achieved for the partner. Hence, the intended prioritization may only be achieved by redundancy allocation, i.e. coding gain and not by allocating cooperative diversity. This traffic-aware allocation of cooperative diversity is performed by embodiments of the present invention.

Embodiments of the present invention exploit traffic-aware asymmetric cooperative diversity (TACD = Traffic-Aware Asymmetric Cooperative Diversity). In contrast to symmetric redundancy allocation schemes, for example, layered cooperation or coded cooperation, cf. T. E. Hunter and A. Nosratinia, "Cooperation diversity through coding," in Proc. of IEEE International Symposium on Information Theory (ISIT), July 2002, p. 220, it can be an asymmetric combination of cooperative diversity and packet classification, which is carried out by embodiments of the present invention. Furthermore, embodiments of the present invention use a different control scheme, which enables the prioritization of traffic by the allocation of diversity instead of redundancy. With TACD users are always trying to cooperate using a modified phase of a coded cooperation scheme, as shown in Fig. 4. Fig. 4 shows a flow chart of an embodiment during the second phase "Phase 2". From the first phase "Phase 1", the embodiment of a transceiver received and decoded the k information bits from n1 partners bits in a block 410. In a next step 420, the transceiver verifies, whether the data packet was received correctly or not, which can for example, be realized by a CRC check. If the data packet was not received correctly, the transceiver transmits its own redundancy bits during the second phase, as indicated in step 430 in Fig. 4.

If the data packet was received correctly during the first phase, then the transceiver compares the priority of the data of the received packet to the priority of its own data in a step 440. Cooperation is carried out in both cases, i.e. if the priority of the own data is higher or lower than the priority of the other data, which is indicated by the two steps 450 and 460. In dependence on the priority relation between the own data and the other data, the amount of redundancy, respectively the actual number of bits transmitted during the second phase is determined. If the own priority is lower than the priority of the other data, the number of partner bits transmitted in the second phase is increased according to step 470. If the own priority is higher than the priority of the other data, the number of own bits transmitted during the second phase is increased according to step 480.

As illustrated in Fig. 4, only if cooperation is possible, as determined in step 420, packet priorities are considered in step 440. In this case users compare their traffic priorities in step 440 and decide which user provides diversity for the partners, i.e. has a lower own priority and which user provides diversity for itself, i.e. has a higher own priority.

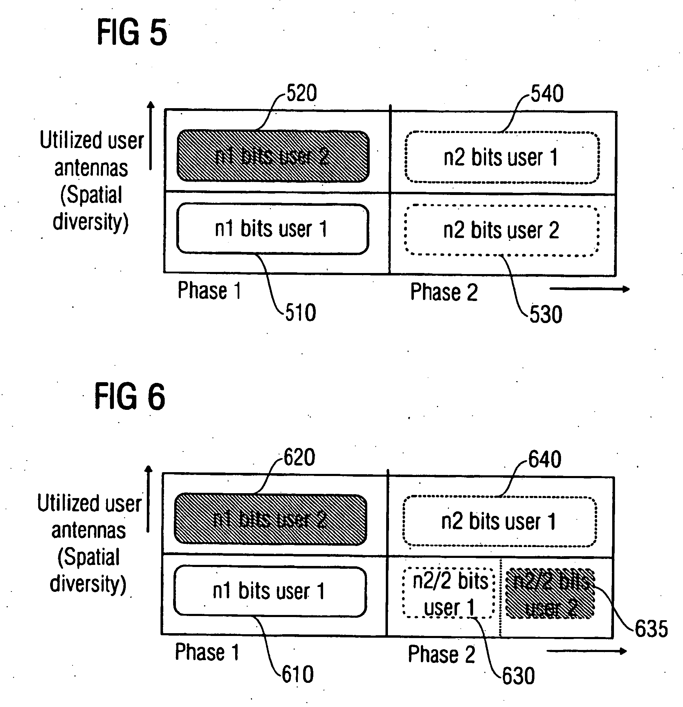

Based on the result of the priority comparison in step 440, embodiments of the present invention enable the precise adjustment of the receive diversity. In one embodiment, traffic-aware diversity allocation allocates the complete diversity branches of phase 2 to the users according to their traffic priority. Fig. 5 shows an embodiment of this scenario. In Fig. 5, the ordinate again shows the utilized user antennae or spatial diversity, while the abscissa shows the time indicating "Phase 1" and "Phase 2", similar to what was explained with respect to Fig. 3. Moreover, Fig. 5 shows transmissions of the first user at the bottom and transmissions of the second user at the top.

Fig. 5 shows a transmission of n1 bits for user 1 and a transmission of n1 bits for user 2 during "Phase 1". Similar to the scenario depicted in Fig. 3 and indicated by blocks 510 and 520. In the scenario depicted in Fig. 5 it is assumed that the priority of the data of user 1 is higher than the priority of the data of user 2, therefore, during the second phase "Phase 2" both users transmit n2 bits of user 1, as indicated by blocks 530 and 540. As illustrated in Fig. 5, the allocation of diversity branches can be asymmetrical among the cooperating users, i.e. each user may receive a different number of branches and/or bits per frame. During the second phase "Phase 2" of the example in Fig. 5, the user 1 has a high priority and receives both branches, while the user 2 has a low priority and receives no diversity branches during the second phase. Consequently, user 1 with high priority receives three diversity branches of n1+2n2 bits and user 2 with the lower priority receives only one branch of n1 bits in the total frame. Apart from these asymmetrical allocations, with equal traffic priorities or three different traffic classes even standard coded cooperation can be realized by embodiments of the present invention.

Another advantage of embodiments of the present invention is depicted in Fig. 6. Fig. 6 shows another view graph of the transmissions of a user 1 and user 2 during the two transmission phases "Phase 1" and "Phase 2". Similar to what was described for Figs. 3 and 5 during the first phase "Phase 1", user 1 transmits n1 bits as indicated by block 610 and user 2 transmits n1 bits as indicated by block 620. The embodiment depicted in Fig. 6 carries out mutual cooperation and provides diversity allocation at a finer granularity than traffic-aware diversity allocation alone as it was described above. This is enabled by allowing users to transmit own and partner bits during the second transmission phase "Phase 2". With mutual cooperation, the second phase of a user may be separated in slots containing redundancy for other users. Fig. 6 depicts a simple embodiment of this approach. It is assumed that the data of user 1 has a higher priority than the data of user 2. Therefore, user 2 transmits redundancy for user 1, i.e. a block of n2 bits for user 1 as indicated by the blocks 640 in Fig. 6. User 1 however, does not transmit only its own redundancy bits, but redundancy bits for its own data packet and redundancy bits for the data packet of user 2, which is indicated by the blocks 630 and 635 transmitted by user 1 during "Phase 2" in Fig. 6. In the second phase "Phase 2 " user 1 provides only a part of its diversity branch to user 2, while user 2 provides its full diversity branch to the redundancy bits of user 1. Here, user 1, which has a higher priority uses three branches and n1+3/2n2 bits, while user 2 receives two branches and the remaining n1+n/2 bits of the full frame.

The precise adjustment of the bit allocation with mutual cooperation and embodiments of the present invention enables the allocation the diversity branches and bits separately. Compared to a symmetric allocation of standard coded or layered cooperation, this asymmetric allocation results in an increased amount of degrees of freedom DGF (DGF = Degree of Freedom), which provides the example of a more accurate prioritization.

Embodiments of the present invention therefore provide the advantage that the diversity gain is increased for higher importance traffic by allocating user cooperative diversity. Mutual cooperation helps adjusting the diversity allocation more precisely by further separating the phase 2 of the cooperative transmission. In contrast to layered cooperation these two TACD functions of embodiments of the present invention perform redundancy allocation between both phases of the cooperation scheme. At this time all partners know whether and how much cooperation is possible, and hence, the number of diversity branches achieved by this cooperation. Unlike layered cooperation, where the amount of diversity branches is unknown during the adaptation, with TACD embodiments of the present invention diversity branches are directly allocated to the users.

Hence, layered cooperation performs only redundancy allocation, i.e. the number of redundancy bits per packet and TACD additionally allocates the diversity branches, i.e. the amount of independently faded channels on which a packet, including redundancy, is transmitted. This provides the advantage that embodiments of the present invention prioritize traffic directly by allocating diversity accordingly. As discussed above, the error probability decreases exponentially with the amount of allocated diversity branches. This allocation may provide a sharper prioritization than linear coding gain provided by a redundancy based approach of, for example layered cooperation or further priority classes. Ideally, both functions of embodiments of the present invention decrease the error probability for important media packets and increased quality of the received media streams.

According to the above description at the beginning of a TACD cycle, each user determines the priority of a current media packet by packet classification. Furthermore, it is assumed that each user knows the priority of the current packet of all cooperating partners, i.e. the partners to be helper for. This can, for example, be carried out by an explicit information obtained from, for example, a packet header from the partners data packet, or respectively an implicit information obtained when decoding the partners packet.

After determining the priority of all the current media packets, the first phase of coded cooperation starts. In this phase all users decode and puncture their packets according to a defined cooperation level. After all users have transmitted their n1 bits the second phase of coded cooperation starts, where each user decides if cooperation is possible. As described above, a user transmits its own n2 bits if he cannot correctly decode the k data bits of the other users, compare Fig. 4. If decoding is possible traffic-aware diversity allocation is performed to adapt the number of diversity branches per user to the priority of the transmitted packets. Here, each user compares the priority of its own packet to those of all other cooperating users. With lower own priority the user cooperates by transmitting the n2 bits for its partner. If the own priority is higher, the user transmits its own n2 bits in the second phase. This provides additional diversity branches since the partner, i.e. with lower priority, still cooperates.

A function, which may be performed additionally in a cooperative case is mutual cooperation. This function further adjusts the amount of allocated diversity by allowing users to transmit own and partner bits in the second phase. If only one allocation is used for all partners, this is equivalent to choosing the cooperation level at higher granularity than standard coded cooperation. However, as illustrated in Fig. 6 with mutual information, each user may use its own diversity allocation. This may result as an asymmetric scenario where each user receives a different amount of diversity in the second phase. Hence, each user may be prioritized separately according to its traffic class. With mutual cooperation individual priorities can be assigned even with more traffic classes than spatial diversity branches in the second phase.

While embodiments of the present invention utilize traffic-aware diversity allocation and mutual cooperation, which are independent, they complement one another. As indicated in the examples whether they are performed in combination by embodiments of the present invention depends on the state of the cooperation and the results of the traffic evaluation. If the users can cooperate and the media packet priorities defer traffic-aware diversity allocation is performed. Mutual cooperation is executed by embodiments of the present invention to support more than two traffic classes or partners.

Furthermore, embodiments of the present invention can be combined with other protocols, as for example, MAC-layer (MAC = Medium Access Control) classification, for example, 802.11e, where important packets get higher access priority to the channel, compare F. Zhai, C. E. Luna, Y. Eisenberg, T. N. Pappas, R. Berry, and A. K. Katsaggelos, "Joint source coding and packet classification for realtime video transmission over differentiated services networks," IEEE Transactions on Multimedia , vol. 7, no. 4, pp. 716-726, Aug. 2005 and J. Shin, J. W. Kim, and C.C. J. Kuo, "Quality of service mapping mechanism for packet video in differentiated services network," IEEE Transactions on Multimedia , vol. 3, no. 2, pp. 219-231, June 2001, or with traffic-aware rate allocation techniques, as for example described in X. Xu, Y. Wang, and E. Erkip, "Layered cooperation for wireless multimedia communications," in Proc. of Picture Coding Symposium , Dec. 2004.

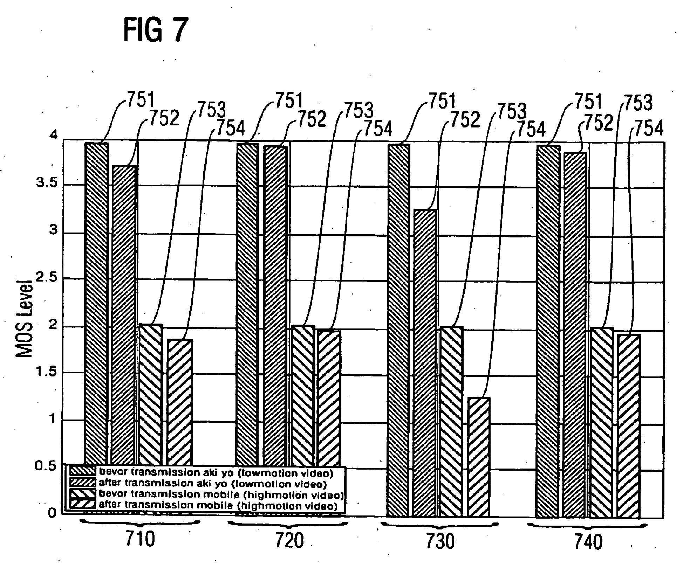

Fig. 7 depicts simulation results in terms of a mean opinion score (MOS = Mean Opinion Score). Fig. 7 depicts bar graphs for cooperative coding 710, static asymmetric cooperative coding for high priority users 720, static asymmetric cooperative coding for low priority users 730 and according to one embodiment of the present invention traffic-aware cooperative coding 740.

For each of the four cooperative coding approaches 710, 720, 730, and 740 Fig. 7 shows four bar graphs, presenting mean opinion score levels. Within each group of four bars, the very left bar 751, illustrates the mean opinion score before transmission for a low motion video. The bars 751 therefore depict, the quality of the considered video stream, before being transmitted through the network with the respective cooperative coding scheme. The second bars from the left 752, depict the mean opinion score after the transmission, so the difference between the two bars, 751 and 752, indicates the loss in terms of MOS during the transmission using the respective cooperative coding scheme. For all simulations a mean uplink signal-to-noise-ratio (SNR = signal-to-noise-ratio) SNR=5dB, a mean inter-user SNR=5dB, and no antennae correlation were assumed.

The same set of simulations was carried out for a high motion video, of which the bars 753 indicate the mean opinion score before transmission and the bars 754 indicate the mean opinion score after transmission, and differences between the bars 753 and 754 indicate the loss in terms of MOS in the network during transmission with the respective cooperative coding scheme.

Fig. 7 shows the evaluation of the mean opinion score of two videos with high and low motion, "mobile" and "akiyo" respectively. It shows similar overall performance of the new approach, for which the simulation results are depicted by the four bars 740, with respect to symmetrical cooperative coding 710 and static asymmetric cooperative coding for high priority user 720 or for low priority user 730.

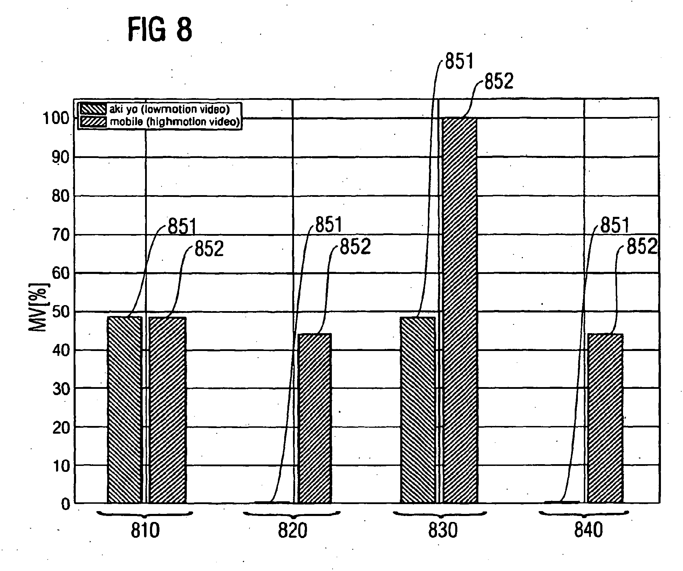

The MOS is a metric that reflects the quality over the entire video, without capturing sporadic degradations in quality. Temporal degradations within the video quality are, therefore, averaged over the duration of the entire video. Therefore, another metric, the so-called mean distortion in interval (MIV = mean distortion in interval) is utilized and results are depicted in Fig. 8.

The distortion in an interval (DIV = distortion in interval) maps an arbitrary interval of a video stream to a number of frames with reduced mean opinion score value and a successful video is then a video, for which for all intervals of a fixed size the DIV metric is smaller than a given threshold. For the simulation results depicted in Fig. 8, an interval size of 25 video frames was considered, and Fig. 8 correspondingly depicts the percentage of video frames with a mean opinion score, which is worse than the mean opinion score from the original version within the interval of 25 video frames. Consequently, Fig. 8 depicts two bar graphs per cooperative coding scheme, in which the set of bar graphs 810 shows the results for cooperative coding, the bar graph 820 shows the static asymmetric cooperative coding with static high priority allocation, 830 shows the static asymmetric cooperative coding approach with low priority, and 840 shows the traffic-aware cooperative coding according to one embodiment of the present invention. Within each of the sets of bar graphs, the bar graphs 851 show the simulation result for the low motion video and the bar graphs 852 for the high motion video.

From the results depicted in Fig. 8 it can be seen, that the inventive traffic-aware cooperative coding reduces the number of sporadic quality degradations, in contrast to static cooperative coding, where a high priority user gets a high quality, at a cost of very degraded quality for the low priority user according to the bar graphs 820 and 830. With the embodiment of the traffic-aware cooperative coding, all users approximately achieve the MIV of a high priority user in a static asymmetric cooperative coding scenario for high priority users.

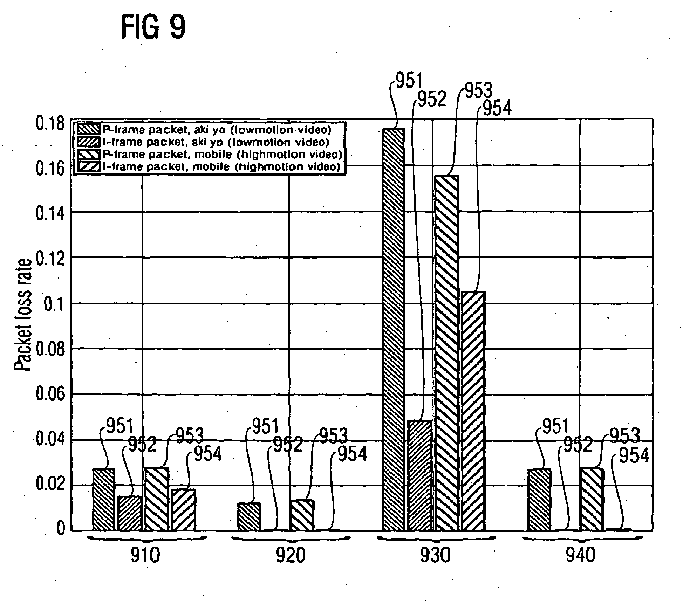

Similar observations can be made, when taking the packet loss into account. Fig. 9 shows simulation results for packet loss rates, where in Fig. 9 four groups of four bars are depicted for the four cooperative coding schemes: cooperative coding 910, static asymmetric cooperative coding with high priority 920, static asymmetric cooperative coding with low priority 930 and traffic-aware cooperative coding 940. Within each group of bars, the bars 951 indicate the simulation results for a P-frame packet for a low motion video, respectively the bars 952 indicate the simulation results for an I-frame packet for a low motion video. Accordingly the bars 953 indicate the simulation results for a P-frame packet in a high motion video and respectively the bars 954 indicate the simulation results for I-frame packets within a high motion video scenario. From the simulation results depicted in Fig. 9, similar conclusions can be drawn as from simulation results depicted in Fig. 8.

The inventive approach, represented by the bars 940, yields the same performance for the high priority I-frame data packets as the static asymmetric cooperative coding with high priority 920. For the low priority P-frame packets, the embodiment 940 achieves a little lower performance than the static asymmetric cooperative coding approach with high priority 920, however, the embodiment represented by the bars 940 clearly outperforms the low priority users in the static scheme 930.

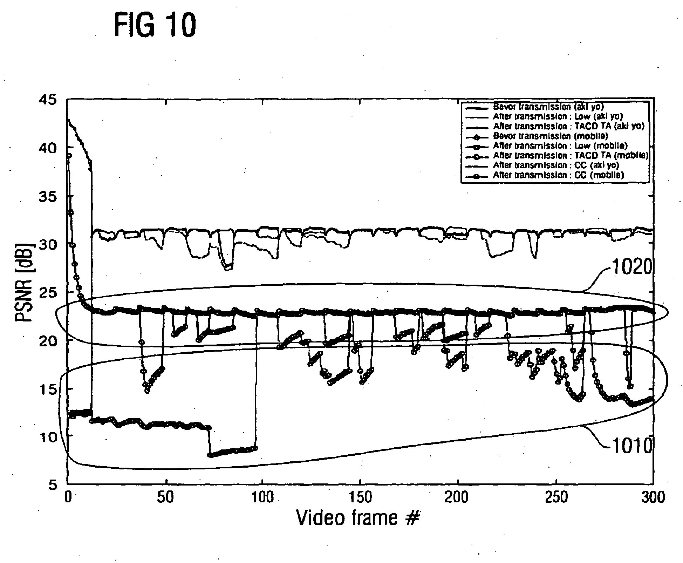

Fig. 10 shows the simulation results for the temporal PSNR (PSNR = peak SNR) of the two videos, i.e. the low motion and the high motion video, before and after the transmission. The most relevant result that Fig. 10 indicates can be seen within the area 1010, which shows the low PSNR of cooperative coding and low priority stations during the initial 10 seconds, compared to the PSNR of a TACD embodiment 1020 during the same period. From the end user viewpoint, this low PSNR translates into very low video quality at the start of the video and at every scene change. The results depicted in Fig. 10 were obtained for 10 seconds of MPEG-4 coded low motion and high motion videos.

Summing up embodiments of the present invention provide the advantage, that the error probability can be decreased when transmitting multi-media data of different priorities through a wireless network. Compared to standard coded cooperation, embodiments of the present invention provide additional diversity branches for media packets, which are classified to be relevant for the quality of a received media stream. Such packets are prioritized using the inventive traffic-aware diversity allocation function, which provides m-1 additional diversity branches in the second phase, if m users cooperate. Increasing the number of diversity branches increases the diversity gain. As discussed above, this significantly lowers the error probability for the important parts of the media stream. Firstly, it increases the overall quality of the media stream at the receiver and secondly, it decreases latency and jitter, since it is more likely that erroneous parts of the stream do not have to be retransmitted, error corrected, or resynchronized.

Furthermore, embodiments of the present invention provide the advantage of introducing priority classes. Compared to the linear coding, the exponential diversity gain increases the range of the possible error probability decrease, which can be used for prioritization. The function mutual cooperation provides more precise adjustment of the allocated diversity branches than traffic-aware diversity allocation. This introduces further priorities, which may be used to support more traffic classes or to prioritize more than two cooperating users. Furthermore, allocating diversity branches and redundancy bits separately provides more DGF for allocation decisions. These DGF can be employed for further priority classes or more accurate prioritization.

Moreover, embodiments of the present invention provide the advantage of possible multiplexing gain. With embodiments of the present invention, i.e. TACD, and the diversity allocation decision is based on the traffic priorities of all cooperating users. Hence, the priorities of all these users can be considered during the allocation process. This provides further DGF for the allocation decision, which may result in a multiplexing gain with many cooperating users. For example, this is the case with three cooperating users if only one user has high priority traffic to transmit. In the second transmission phase this user may receive two diversity branches, through traffic-aware diversity allocation, and the two remaining users share one diversity branch, through mutual cooperation.

Furthermore, embodiments of the present invention provide the advantage of decentralization. The inventive scheme keeps the decentralized approach of coded cooperation. As with the original scheme, cooperation is performed by coding and only one data exchange during the first phase is needed. Embodiments, i.e. TACD, only require the additional information of media traffic priority before the start of the second phase. For example, this can be achieved by using a type of service (TOS = type of service) field in the packet header, which is directed by cooperating users.

Depending on certain implementation requirements of the inventive methods, the inventive methods can be implemented in hardware or in software. The implementation can be performed using a digital storage medium, in particular, a disc, a DVD or a CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

### List of Reference Signs

- 100: Transceiver Apparatus
- 110: Receiver Module
- 120: Prioritization Module
- 130: Transmitter Module

- 210: Phase 1 Encoder
- 220: Phase 1 Puncturer
- 230: Stored Data Packet
- 235: Destination
- 240: Phase 2 Decoder
- 250: Phase 2 Encoder
- 260: Phase 2 Puncturer

- 310: N1 Bits User 1
- 320: N1 Bits User 2
- 330: N2 Bits User 2
- 340: N2 Bits User 1

- 410: Receive and Decode
- 420: Correct Reception
- 430: Transmit Own Bits
- 440: Compare Priorities
- 450: Mutual Cooperation
- 460: Mutual Cooperation
- 470: Increased Partner Bits Transmission in Phase 2
- 480: Increase Own Bits Transmission in Phase 2

- 510: N1 Bits User 1
- 520: N1 Bits User 2
- 530: N2 Bits User 1
- 540: N2 Bits User 1

- 610: N1 Bits User 1
- 620: N1 Bits User 2
- 630: N2/2 Bits User 1
- 635: N2/2 Bits User 2

- 645: N2 Bits User 1

- 710: Cooperative Coding
- 720: Static Asymmetric Cooperative Coding with High Priority
- 730: Static Asymmetric Cooperative Coding with Low Priority
- 740: Traffic-aware Cooperative Diversity
- 751: Before Transmission Low Motion
- 752: After Transmission Low Motion
- 753: Before Transmission High Motion
- 754: After Transmission High Motion

- 810: Cooperative Coding
- 820: Static Asymmetric Cooperative Coding with High Priority
- 830: Static Asymmetric Cooperative Coding with Low Priority
- 840: Traffic-aware Cooperative Diversity
- 851: Low Motion Video
- 852: High Motion Video

- 910: Cooperative Coding
- 920: Static Asymmetric Cooperative Coding with High Priority
- 930: Static Asymmetric Cooperative Coding with Low Priority
- 940: Traffic-aware Cooperative Diversity
- 951: P-Frame Low Motion
- 952: I-Frame Low Motion
- 953: P-Frame High Motion
- 954: I-Frame High Motion

- 1010: PSNR Cooperative Coding and Static Asymmetric Cooperative Coding with Low Priority
- 1020: Traffic-aware Cooperative Diversity

## Claims

1. Transceiver apparatus (100) for transmitting a first data packet in a wireless cooperative network, comprising
a receiver module (110) for receiving a second data packet from a remote transceiver during a first frame;
a prioritization module (120) for comparing a priority of the first data packet and a priority of the second data packet and for determining a data content of a second frame based on a priority comparison result such that higher priority information is preferred over lower priority information and wherein at least a part of the data content is based on the second data packet;
a transmitter module (130) for transmitting the data content during the second frame.

2. Transceiver apparatus (100) of claim 1, wherein the prioritization module (120) is adapted for basing the data content only on the second data packet, if the priority of the second data packet is higher than the priority of the first data packet.

3. Transceiver apparatus (100) of one of the claims 1 or 2, wherein the prioritization module (120) is adapted for transcoding the second data packet and for adapting the transcoding to a number of bits based on the priority of the second data packet.

4. Transceiver apparatus (100) of one of the claims 1 to 3, wherein the prioritization module (120) is adapted for determining a first number of bits of the data content to be based on the first data packet and a second number of bits of the data content to be based on the second data packet, the first number and the second number being based on the priorities of the first and second data packets.

5. Transceiver apparatus (100) of one of the claims 1 to 4, wherein the prioritization module (120) is adapted for including a first number of redundancy bits and a second number of redundancy bits into the data content.

6. Transceiver apparatus (100) of one of the claims 1 to 5, wherein the transmitter module (130) is adapted for transmitting the first data packet before the data content.

7. Transceiver apparatus (100) of one of the claims 1 to 6, wherein the receiver module (110) is adapted for receiving a second acknowledgement packet associated with the second data packet.

8. Transceiver apparatus (100) of one of the claims 1 to 7, wherein the receiver module (110) is adapted for performing a cyclic redundancy check on the second data packet to determine if it was received successfully.

9. Transceiver apparatus (100) of one of the claims 1 to 8, wherein the receiver module (110) is adapted for receiving data packets according to the 802.11 specifications and wherein the transmitter module (130) is adapted for transmitting data packets according to the 802.11 specifications.

10. Transceiver apparatus (100) of one of the claims 1 to 9, wherein the receiver module (110) is adapted for receiving data packets according to a TDMA or a COMA system.

11. Transceiver apparatus (100) of one of the claims 1 to 10, wherein the transmitter module (130) is adapted for transmitting data packets according to a TDMA or a CDMA system.

12. Transceiver apparatus (100) of one of the claims 1 to 11, wherein the first data packet comprises I-, P-, or B-data of MPEG-encoded video data.

13. Transceiver apparatus (100) of one of the claims 1 to 12, wherein the second data packet comprises I-, P-, or B-data of MPEG-encoded video data.

14. Transceiver apparatus (100) of one of the claims 1 to 13, wherein the first or second data packet comprises voice data.

15. Method for transmitting a first data packet in a wireless cooperative network comprising the steps of
receiving a second data packet from a remote transceiver during a first frame;
comparing a priority of the first data packet to be transmitted and a priority of the second data packet;
determining a data content of a second frame based on a priority comparison result such that higher priority information is preferred over lower priority information and wherein at least a part of the data content is based on the second data packet; and
transmitting the data content during the second frame.

16. Computer program with a program code for performing the method according to claim 15, when the program code runs on a computer.

## Patentansprüche

1. Sende/Empfangsvorrichtung (100) zum Senden eines ersten Datenpakets in einem drahtlosen zusammenwirkenden Netzwerk, mit
einem Empfängermodul (110) zum Empfangen eines zweiten Datenpakets von einem entfernten Sende-Empfänger während eines ersten Rahmens;
einem Priorisierungsmodul (120) zum Vergleichen einer Priorität des ersten Datenpakets und einer Priorität des zweiten Datenpakets und zum Bestimmen eines Dateninhalts eines zweiten Rahmens basierend auf einem Prioritätsvergleichsergebnisses, derart, dass Informationen höherer Priorität gegenüber Informationen niedrigerer Priorität bevorzugt sind, und wobei zumindest ein Teil des Dateninhalts auf dem zweiten Datenpaket basiert;
einem Sendermodul (1340) zum Senden des Dateninhalts während des zweiten Rahmens.

2. Sende/Empfangsvorrichtung (100) gemäß Anspruch 1, bei der das Priorisierungsmodul (120) zum Zugrundelegen lediglich des zweiten Datenpakets für den Dateninhalt angepasst ist, falls die Priorität des zweiten Datenpakets höher als die Priorität des ersten Datenpakets ist.

3. Sende/Empfangsvorrichtung (100) gemäß einem der Ansprüche 1 oder 2, bei der das Priorisierungsmodul (120) zum Transcodieren des zweiten Datenpakets und zum Anpassen des Transcodierens an eine Anzahl von Bits basierend auf der Priorität des zweiten Datenpakets angepasst ist.

4. Sende/Empfangsvorrichtung (100) gemäß einem der Ansprüche 1 bis 3, bei der das Priorisierungsmodul (120) zum Bestimmen der ersten Anzahl von Bits des Dateninhalts, der auf dem ersten Datenpaket basieren soll, und einer zweiten Anzahl von Bits des Dateninhalts, der auf dem zweiten Datenpaket basieren soll, angepasst ist, wobei die erste Anzahl und die zweite Anzahl auf den Prioritäten des ersten und des zweiten Datenpakets basieren.

5. Sende/Empfangsvorrichtung (100) gemäß einem der Ansprüche 1 bis 4, bei der das Priorisierungsmodul (120) zum Einschließen einer ersten Anzahl von Redundanzbits und einer zweiten Anzahl von Redundanzbits in den Dateninhalt angepasst ist.

6. Sende/Empfangsvorrichtung (100) gemäß einem der Ansprüche 1 bis 5, bei der das Sendermodul (130) zum Senden des ersten Datenpakets vor dem Dateninhalt angepasst ist.

7. Sende/Empfangsvorrichtung (100) gemäß einem der Ansprüche 1 bis 6, bei der das Empfängermodul (110) zum Empfangen eines zweiten Bestätigungspakets, das dem zweiten Datenpaket zugeordnet ist, angepasst ist.

8. Sende/Empfangsvorrichtung (100) gemäß einem der Ansprüche 1 bis 7, bei der das Empfängermodul (110) zum Durchführen einer zyklischen Verbindungsredundanzprüfung an dem zweiten Datenpaket angepasst ist, um zu bestimmen, ob dasselbe erfolgreich empfangen wurde.

9. Sende/Empfangsvorrichtung (100) gemäß einem der Ansprüche 1 bis 8, bei der das Empfängermodul (110) zum Empfangen von Datenpaketen gemäß den 802.11-Spezifikationen angepasst ist, und bei der das Sendermodul (130) zum Senden von Datenpaketen gemäß den 802.11-Spezifikationen angepasst ist.

10. Sende/Empfangsvorrichtung (100) gemäß einem der Ansprüche 1 bis 9, bei der das Empfängermodul (110) zum Empfangen von Datenpaketen gemäß einem TDMA- oder einem CDMA-System angepasst ist.

11. Sende/Empfangsvorrichtung (100) gemäß einem der Ansprüche 1 bis 10, bei der das Sendermodul (130) zum Senden von Datenpaketen gemäß einem TDMA- oder einem CDMA-System angepasst ist.

12. Sende/Empfangsvorrichtung (100) gemäß einem der Ansprüche 1 bis 11, bei der das erste Datenpaket I-, P- oder B-Daten von MPEG-codierten Videodaten aufweist.

13. Sende/Empfangsvorrichtung (100) gemäß einem der Ansprüche 1 bis 12, bei der das zweite Datenpaket I-, P- oder B-Daten von MPEG-codierten Videodaten aufweist.

14. Sende/Empfangsvorrichtung (100) gemäß einem der Ansprüche 1 bis 13, bei der das erste oder das zweite Datenpaket Sprachdaten aufweist.

15. Verfahren zum Senden eines ersten Datenpakets in einem drahtlosen zusammenwirkenden Netzwerk, mit den Schritten
Empfangen eines zweiten Datenpakets von einem entfernten Sende-Empfänger während eines ersten Rahmens;
Vergleichen einer Priorität des ersten Datenpakets, das gesendet werden soll, und einer Priorität des zweiten Datenpakets;
Bestimmen eines Dateninhalts eines zweiten Rahmens basierend auf einem Prioritätsvergleichsergebnis, derart, dass Informationen höherer Priorität gegenüber Informationen niedrigerer Priorität bevorzugt sind, und wobei zumindest ein Teil des Dateninhalts auf dem zweiten Datenpaket basiert; und
Senden des Dateninhalts während des zweiten Rahmens.

16. Computerprogramm mit einem Programmcode zum Durchführen des Verfahrens gemäß Anspruch 15, wenn der Programmcode auf einem Computer abläuft.

## Revendications

1. Appareil émetteur-récepteur (100) destiné à émettre un premier paquet de données dans un réseau coopératif sans fil, comprenant
un module de réception (110) destiné à recevoir un deuxième paquet de données d'un émetteur-récepteur éloigné pendant une première trame;
un module de prioritisation (120) destiné à comparer une priorité du premier paquet de données et une priorité du deuxième paquet de données et à déterminer un contenu de données d'une deuxième trame sur base d'un résultat de comparaison de priorité de sorte que les informations de priorité supérieure soient préférées sur les informations de priorité inférieure et où au moins une partie du contenu de données est basée sur le deuxième paquet de données;
un module d'émission (130) destiné à émettre le contenu de données pendant la deuxième trame.

2. Appareil émetteur-récepteur (100) selon la revendication 1, dans lequel le module de prioritisation (120) est adapté pour baser le contenu de données uniquement sur le deuxième paquet de données si la priorité du deuxième paquet de données est supérieure à la priorité du premier paquet de données.

3. Appareil émetteur-récepteur (100) selon l'une des revendications 1 ou 2, dans lequel le module de prioritisation (120) est adapté pour transcoder le deuxième paquet de données et pour adapter le transcodage à un nombre de bits sur base de la priorité du deuxième paquet de données.

4. Appareil émetteur-récepteur (100) selon l'une des revendications 1 à 3, dans lequel le module de prioritisation (120) est adapté pour déterminer un premier nombre de bits du contenu de données à baser sur le premier paquet de données et un deuxième nombre de bits du contenu de données à baser sur le deuxième paquet de données, le premier nombre et le deuxième nombre étant basés sur les priorités des premier et deuxième paquets de données.

5. Appareil émetteur-récepteur (100) selon l'une des revendications 1 à 4, dans lequel le module de prioritisation (120) est adapté pour inclure un premier nombre de bits de redondance et un deuxième nombre de bits de redondance dans le contenu de données.

6. Appareil émetteur-récepteur (100) selon l'une des revendications 1 à 5, dans lequel le module d'émission (130) est adapté pour émettre le premier paquet de données avant le contenu de données.

7. Appareil émetteur-récepteur (100) selon l'une des revendications 1 à 6, dans lequel le module de réception (110) est adapté pour recevoir un deuxième paquet de confirmation associé au deuxième paquet de données.

8. Appareil émetteur-récepteur (100) selon l'une des revendications 1 à 7, dans lequel le module de réception (110) est adapté pour effectuer une vérification de redondance de liaison cyclique sur le deuxième paquet de données, pour déterminer s'il a été reçu avec succès.

9. Appareil émetteur-récepteur (100) selon l'une des revendications 1 à 8, dans lequel le module de réception (110) est adapté pour recevoir les paquets de données selon les spécifications 802.11 et dans lequel le module d'émission (130) est adapté pour émettre les paquets de données selon les spécifications 802.11.

10. Appareil émetteur-récepteur (100) selon l'une des revendications 1 à 9, dans lequel le module de réception (110) est adapté pour recevoir les paquets de données selon un système TDMA ou un système CDMA.

11. Appareil émetteur-récepteur (100) selon l'une des revendications 1 à 10, dans lequel le module d'émission (130) est adapté pour émettre les paquets de données selon un système TDMA ou un système CDMA.

12. Appareil émetteur-récepteur (100) selon l'une des revendications 1 à 11, dans lequel le premier paquet de données comprend des données I, P ou B de données vidéo codées MPEG.

13. Appareil émetteur-récepteur (100) selon l'une des revendications 1 à 12, dans lequel le deuxième paquet de données comprend des données I, P ou B de données vidéo codées MPEG.

14. Appareil émetteur-récepteur (100) selon l'une des revendications 1 à 13, dans lequel le premier ou le deuxième paquet de données comprend des données vocales.

15. Procédé pour émettre un premier paquet de données dans un réseau coopératif sans fil, comprenant les étapes consistant à
recevoir un deuxième paquet de données d'un émetteur-récepteur éloigné pendant une première trame;
comparer une priorité du premier paquet de données à émettre et une priorité du deuxième paquet de données;
déterminer un contenu de données d'une deuxième trame sur base d'un résultat de comparaison de priorité de sorte que les informations de priorité supérieure soient préférées sur les informations de priorité inférieure et où au moins une partie du contenu de données est basée sur le deuxième paquet de données; et
émettre le contenu de données pendant la deuxième trame.

16. Programme d'ordinateur avec un code de programme pour réaliser le procédé selon la revendication 15 lorsque le code de programme est exécuté sur un ordinateur.
